# EUROPEAN PATENT APPLICATION

(11) **EP 1 543 947 A1**
(43) Date of publication of application: **22.06.2005**
(21) Application number: 03771379.9
(22) Date of filing: 28.07.2003
(51) Int. Cl.: B32B 3/28

(54) **CARDBOARD SHEET AND PROCESS FOR PRODUCING THE SAME**

(30) Priority: 26.07.2002 JP 2002218066
(71) Applicant: Nippon Daishowa Paperboard Co., Ltd., Chiyoda-ku, Tokyo 101-0041 (JP); Tomoku Co., Ltd., Chiyoda-ku, Tokyo 100-0005 (JP)
(72) Inventor: KAWAGISHI, H., Nippon Daishowa Paperboard Co., Ltd, Chiyoda-ku, Tokyo 101-0041 (JP); ISOBE, Taisuke, Nippon Daishowa Paperboard Co.,Ltd, Chiyoda-ku, Tokyo 101-0041 (JP); KAWAMOTO, Etsuji, c/o Nippon Daishowa Paperboard, Ashikaga-shi, Tochigi 326-0027 (JP); SATO, Teruaki, Nippon Daishowa Paperboard Co., Ltd, Chiyoda-ku, Tokyo 1 01-0041 (JP); MIZUKAMI, Fumioka, c/o Tomoku Co., Ltd., Chiyoda-ku, Tokyo 100-0005 (JP)
(74) Representative: Smith, Norman Ian
(86) International application number: PCT/JP2003/009531
(87) International publication number: WO 2004/011240

(57) **Abstract**

A corrugated fiberboard sheet includes three kinds of paperboards that are an outer paperboard, a corrugating medium and -an inner paperboard. Each of the paperboards includes a paperboard of not less than three layers of raw material mainly of wastepaper. All the layers of each of the paperboards are given a waterproofing treatment. The ratio of incorporation of a fungusproofing agent and positions of incorporation satisfy the conditions (1) the ratio of incorporation of the fungus proofing agent in the outermost layers of the outer paperboard and the inner paperboard being in the range of 1 to 4%, (2) the ratio of incorporation of the fungusproofing agent in the innermost layers of the outer paperboard and the inner paperboard being in the range of 0.5 to 4% and (3) the ratio of incorporation of the fungusproofing agent in the opposite outermost layers of the corrugating medium being in the range of 0.5 to 4%. The corrugated fiberboard sheet thus constructed can be advantageously used as a case like a tray for containing seedling pots which are used for raising the seedlings of plants, such as vegetables and flowers, for example.

## Description

### Technical Field:

This invention relates to a corrugated fiberboard sheet for use in cases for seedling pots which are used for raising seedlings of such plants as vegetables and flowers, for example, and a method for the production thereof.

### Background Art:

As trays for seedling pots, trays made of such inexpensive plastic materials as polyvinyl chloride have been used hitherto. These trays, after completing the purpose of seedlings, have been disposed of by reclamation or incineration.

These trays, when subjected to reclamation, shun biodegradation and suffer their synthetic resin components to survive for a long time in the soil and, when subjected to incineration, entail the problem of emitting dioxin depending on the conditions of disposal. Thus, the desirability of developing a tray capable of being recycled has been finding recognition.

The tray is further required to excel in fungus resistance and water resistance because it is fated to be wetted when the plants in seedling pots contained therein are sprinkled with water for a long time with the object of growing the plants. If the tray does not possess sufficient fungus resistance, it will suffer growth of fungus on the surface or the end face thereof in consequence of frequent wetting with water and further suffer this fungus to impair the external appearance of the tray and adhere to the user's hands when the user holds the tray and moves it to the extent of jeopardizing his hygiene. If the tray does not possess sufficient water resistance, it will suffer the strength thereof to be impaired by the water being sprayed on the plants in the pots and will possibly fail to retain the shape thereof.

In recent years, paper products fungusproofed with the object of fulfilling the desirability mentioned above are under development. JP-A HEI 9-67797, for example, suggests the idea of causing paper products of natural fibers or synthetic fibers incorporated --and coated with an antibacterial fungusproofing agent or mixing an antibacterial fungusproofing agent with a printing ink, coating material, coating fluid, dye liquor, surface strength agent, adhesive agent, or water-repelling agent and treating the surface of paper with the resultant mixture. This patent document, however, has no mention of a method for the manufacture of a paper product capable of withstanding such harsh conditions as prolonged water spray.

JP-A 2001-130649 proposes a corrugated fiberboard sheet which is subjected to an antibacterial processing for the purpose of retaining the freshness of fruits and vegetables. This sheet, however, is deficient in the ability to permit recycling because it requires including in the lamination thereof polyethylene or polypropylene resin which is said to be a nonbiodegradable substance.

JP-A 2002-112637 proposes a seedling tray incorporating a biodegradable resin, a fungus-resisting agent and a water-repelling agent. This seedling tray, however, has low strength and sustains a fracture in the bottom thereof when it contains numerous seedling pots of pulp mold and gets moved. Further, this tray is aimed at biodegradation and is devoid of the ability to permit recycling. It is also at a disadvantage in suffering decline of fungus resistance when it uses biodegradable fiber.

With reference to cost, the use of an expensive fungus-resisting agent in a copious amount results in a great addition to cost. Thus, the repression of the consumption of the fungus-resisting agent constitutes one point in fulfilling the cost performance.

This invention has been proposed for the purpose of solving the problems of the prior art mentioned above and is aimed at providing a corrugated fiberboard sheet which possesses fungus resistance, water resistance, requisites for cost performance, shape-retaining property and ability to permit recycling and can be used advantageously for a tray for containing seedling pots as described above and a method for the production thereof.

### Disclosure of the Invention:

This invention relates to a corrugated fiberboard sheet composed of three kinds of paperboards, i.e. an outer paperboard, a corrugating medium and an inner paperboard, the paperboards each comprising a paperboard of not less than three layers of raw material mainly of wastepaper, all the layers of each of the paperboards given an incorporated waterproofing treatment, and the ratio of incorporation of the fungusproofing agent and the positions of incorporation satisfying the conditions shown below.
1. The ratio of incorporation of the fungusproofing agent in the outermost layers of the outer paperboard and the inner paperboard: 1 to 4%
2. The ratio of incorporation of the fungusproofing agent in the innermost layers of the outer paperboard and the inner paperboard: 0.5 to 4%
3. The ratio of incorporation of the fungusproofing agent in the opposite outermost layers of the corrugating medium: 0.5 to 4%

The corrugated fiberboard sheet of this invention is further furnished on the surfaces of the outermost layers of the outer paperboard and the inner paperboard each with a coating layer having the solid component of a water-repelling agent deposited in the amount of 0.1 to 2.0 g/m².

The method for the production of a corrugated fiberboard sheet according to this invention comprises causing a slurry of the raw material mainly of wastepaper to incorporate therein a water-resisting agent and a prescribed amount of a fungusproofing agent, paper-making the slurry thus treated into an outer paperboard, a corrugating medium and an inner paperboard having the fungusproofing agent incorporated in the prescribed ratio at the aforementioned positions of incorporation, and putting these paperboards into a corrugated fiberboard sheet by the use of a corrugating machine.

As described above, the corrugated fiberboard sheet of this invention is formed of three kinds of paperboards, the paperboards are each formed of not less than three layers, the specific ones of these layers are caused to incorporate therein a fungusproofing agent, and all the layers of each of the paperboards are also caused to incorporate therein at one and the same ratio a medicine (chemical) used for waterproofing treatment. Thus, the specific layers mentioned above are fated to have the fungusproofing agent and the waterproofing agent incorporated therein. Since the raw material is formed mainly of inexpensive wastepaper and the chemicals, such as the fungusproofing agent, are incorporated only in essential portions in necessary amounts, the corrugated fiberboard sheet consequently produced excels in the fungusproofing effect, the waterproofing effect and the requisites of cost performance. Thus, the product can be advantageously utilized for trays for containing seedling pots, for example. When this sheet is constructed into a tray for seedling pots, the tray possesses -stiffness enough to prevent the bottom thereof from being broken when the tray contains -numerous seedling pots and gets moved. Further, since the sheet is formed mainly of waste paper, it can easily be recycled at a board mill.

By causing the specific layers to incorporate the fungusproofing agent and the - waterproofing agent mentioned above in the prescribed amounts, the sheet is enabled to acquire fungusproofness and a shape-retaining effect over a prescribed length of time (at least seven months). By providing the surfaces of the outermost layers of the outer paperboard and the inner-paperboard each with a coating layer having the solid component -of a water-repelling agent deposited in the amount of 0.1 to 2.0 g/m², the sheet is enabled to retain the fungusproofing effect for a still longer time (not less than eight months).

### Brief Description of the Drawings:

Fig. 1(a) is a cross section showing the construction of an outer paperboard and an inner paperboard of a referential example and Fig. 1(b) is a cross section showing the construction of an outer paperboard of a referential comparative example.
Fig. 2 is a cross section showing the construction of a corrugated fiberboard sheet of Example 1.
Fig. 3 is a cross section showing the construction of a corrugated fiberboard sheet of Example 2.
Fig. 4 is a cross section showing the construction of a corrugated fiberboard sheet of Comparative Example 1.
Fig. 5 is a cross section showing the construction of a corrugated fiberboard sheet of Comparative Example 2.
Fig. 6 is a cross section showing the construction of a corrugated fiberboard sheet of Comparative Example 3.
Fig. 7 is a cross section showing the construction of a corrugated fiberboard sheet of Comparative Example 4.

### Best Mode for carrying out the Invention:

First, one example of the production of a corrugated fiberboard sheet according to this invention will be described.

Three kinds of paperboards, i.e. an outer paperboard, a corrugating medium and an inner paperboard, are individually produced by the use of a cylinder paper machine of multi-dryer type. This cylinder paper machine is of a combination type provided with 6 to 7 layers and each layer is provided with raw material vats (tanks).

Each of the paperboards is a multiply board of 6-layers. The paperboard has a basis weight of 210 g/m² and each of the layers has a basis weight in the range of 33 to 41 g/m². The paperboard which assumes the uppermost position of the corrugated fiberboard sheet corresponds to an outer paperboard. The paperboard which assumes the middle position corresponds to a corrugating medium. The paperboard which assumes the lowermost position corresponds to an inner paperboard. These paperboards are formed of a raw material mainly of wastepaper, such as of corrugated fiberboard.

The outer paperboard and the inner paperboard in #1 vat (the first-layer vat): Each paperboard has incorporated, in a slurry of 100% or nearly 100% wastepaper of corrugated fiberboard, 1 to 4% of a fungusproofing agent (the ratio of incorporation calculated according to the formula: [weight of commercial product in original shape/weight of solid component of raw material x 100], the same applies hereinafter) and a waterproofing agent [having 1.5% of rosin sizing agent, 0.3% of a dry strength agent, 0.1% of a wet strength agent and 6.0% of aluminum sulfate which will be collectively referred to simply as "waterproofing agent"]. Incorporated ratio is just mentioned (according to the formula: weight of solid component of chemical/weight of solid component of raw material x 100), providing that the ratio of aluminum sulfate incorporated is calculated according to the formula: (weight of commercial product in the original shape/weight of solid component of raw material x 100). In #6 vat (the sixth-layer vat), the slurry incorporates therein 0.5 to 4% fungusproofing agent and the waterproofing agent, and the roll board is paper-made by the use of a cylinder paper machine.

The roll board of the corrugating medium is paper-made from the slurry incorporating therein 0.5 to 4% fungussproofing agent and the waterproofing agent in #1 and #6 vats.

Incidentally, the waterproofing agent is incorporated equally in all the layers of the outer paperboard, the inner paperboard and the corrugating medium.

Then, the outer paperboard, the corrugating medium and the inner paperboard are put into a corrugated fiberboard sheet by the use of a corrugating machine. The outer paperboard and the inner paperboard are put together in the manufacture of the corrugated fiberboard sheet so that the first layers thereof respectively constitute the outermost layers and the sixth layers thereof the innermost layers.

Optionally, the only first layers of outer paperboard and the inner paperboard may be each coated with the water-repelling agent in the amount of solid- component deposition in the range of 0.1 to 2.0 g/m² by the use of a calender stack and they may be put together with the aforementioned corrugating medium to manufacture a corrugated fiberboard sheet. The outer paperboard and inner paperboard are put together so that the coated surfaces may form the surfaces of the outermost layers. The term "amount of the solid component deposition of the water-repelling agent" means the weight of the solid component of the water-repelling agent which adheres to 1 m² of the sheet.

The optimum amount of addition of the chemicals (fungusproofing agent and waterproofing agent) is decided by factors, such as the use, condition and cost of the corrugated fiberboard sheet. The ratio of incorporation of the fungusproofing agent in the outermost layers of the outer paperboard and the inner paperboard is in the range of 1 to 4%, preferably 1 to 3%, and the ratio of incorporation of the fungusproofing agent in the innermost layers thereof is in the range of 0.5 to 4%, preferably 0.5 to 2%, as mentioned above. Then, the ratio of incorporation of a fungusproofing agent in the opposite outermost layers of the corrugating medium is in the range of 0.5 to 4%, preferably 0.5 to 2%, as mentioned above. If the ratio of incorporation of the fungusproofing agent falls short of the range specified above, the shortage will prevent the added agent from manifesting sufficient fungusproofing effect. If the ratio exceeds 4%, the overage will render the dehydration of the wet sheet during the course of papermaking difficult and exert an adverse effect on the efficiency ofpapermaking.

The surfaces of the outermost layers of the outer paperboard and the inner paperboard, when necessary, may be each provided with a coating layer having the solid component of the water-repelling agent deposited in the amount of 0.1 to 2.0 g/m², preferably 0.1 to 1.0 g/m² as mentioned above. The amount of the water-repelling agent to be deposited in the coating layer, when the corrugated fiberboard sheet is used for a tray intended to contain seedling pots, may be properly decided to suit the length of the seedling -period. If the amount of the water-repelling agent to be deposited falls short of 0.1 g/m², the shortage will prevent the added agent from manifesting a sufficient water-repelling effect Conversely, if the amount exceeds 2.0 g/m², the overage will cause the formed paperboard to produce so unduly high slippage as to exert an adverse effect on the adaptability of the paperboard to the roll-reeling action (by inducing the so-called bamboo-shoot phenomenon of suffering the paperboard to stick out of the edges of a roll board).

Though this invention does not particularly discriminate the fungusproofing agent to be used therein, it uses a fungusproofing agent which is composed of principal components, such as an organic nitrogen ingredient, an organic nitrogen sulfur ingredient, an organic sulfur ingredient, a thiazole derivative ingredient and a quaternary ammonium salt ingredient.

The waterproofing agent to be used in this invention possesses a water absorption degree of not more than 30 g/m² as determined by the one-minute Cobb test specified in JIS (Japanese Industrial Standard) P8140 and the ratio of increase of not more than 60% in the weight during 24 hours' immersion in water, as mentioned in JP-A HEI 7-334104. A sizing agent, a dry strength agent, a wet strength agent and aluminum sulfate correspond to a complete waterproofing agent, and they are incorporated, respectively. The sizing agent may be a rosin substance or a styrene acryl substance, the dry strength agent a polyacryl amide substance, and the wet strength agent a polyamide epichlorohydrin substance, a polyamide epoxy substance or a urea substance.

Though this invention does not particularly need to discriminate the water-repelling agent to be used therein, it uses an agent which is composed of principal components, such as a paraffin ingredient, a wax ingredient, an acrylic ingredient and a fluorine ingredient

This invention will be described specifically below with reference to the following examples and comparative examples. It is not limited, however, to these examples. In these examples and comparative examples, the ratio, %, of incorporation represents the ratio of the weights of the fungusproofing agent and waterproofing agent added relative to the total weight of solid components in the slurry, and the amount of the water-repelling agent (g/m²) to be deposited represent the amount of solid components deposited.

### Example 1:

### (Manufacture of outer paperboard and inner paperboard: Referential Example)

A roll board of 100% corrugated fiberboard wastepaper was paper-made by the use of a cylinder paper machine of multi-dryer type.

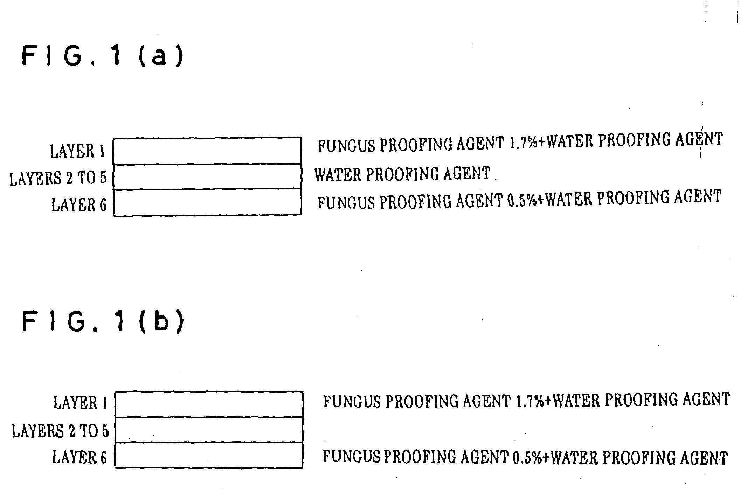

The first layer had 1.7% fungusproofing agent and a waterproofing agent incorporated therein, the sixth layer had 0.5% fungusproofing agent and a waterproofing agent incorporated therein, and the second through fifth layers each had only a waterproofing agent incorporated therein. The waterproofing agent is incorporated uniformly in the same amount in the first to sixth layers of the three kinds of paperboards. In brief, incorporation prescription of the first layer is as follows: (1.7% fungusproofing agent, 1.5% rosin sizing agent. 0.3% dry strength agent, 0.1% wet strength agent and 6.0% aluminum sulfate relative to the total weight of the solid components of raw material). Two roll boards were paper-made as described above and were used for an outer paperboard and an inner paperboard intended for Referential Example. The construction of the outer paperboard and the inner paperboard mentioned above is shown in Fig. 1(a). As the fungusproofing agent used herein was an organic nitrogen product of Daiwa Kagaku Kogyo Ltd., Japan, sold under the trademark designation of "Amorden."

### (Production of corrugating medium)

For the first layer and the sixth layer, the slurry having 0.5% fungusproofing agent and a waterproofing agent incorporated therein was paper-made in the same manner as described above to produce a roll board, which was used as a corrugating medium.

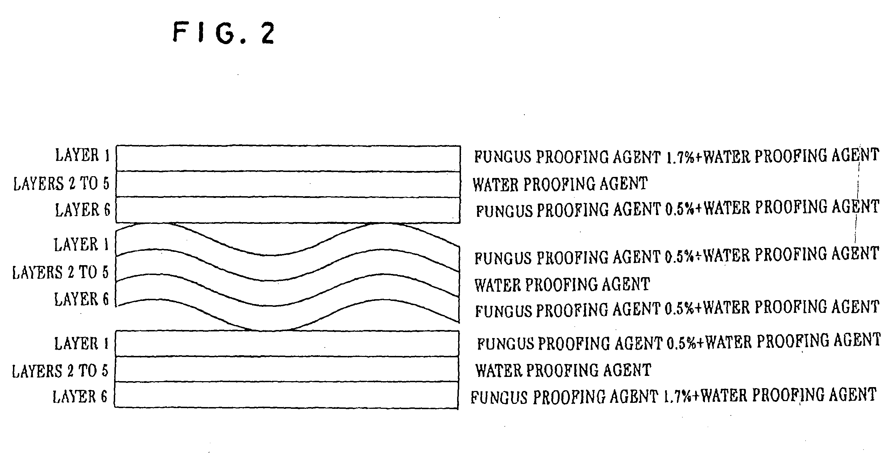

The three kinds of roll boards, i.e. the outer paperboard, inner paperboard and corrugating medium, thus obtained were put into a corrugated fiberboard sheet by the use of a corrugating machine. The construction of the corrugated fiberboard sheet mentioned above is shown in Fig. 2.

### Example 2:

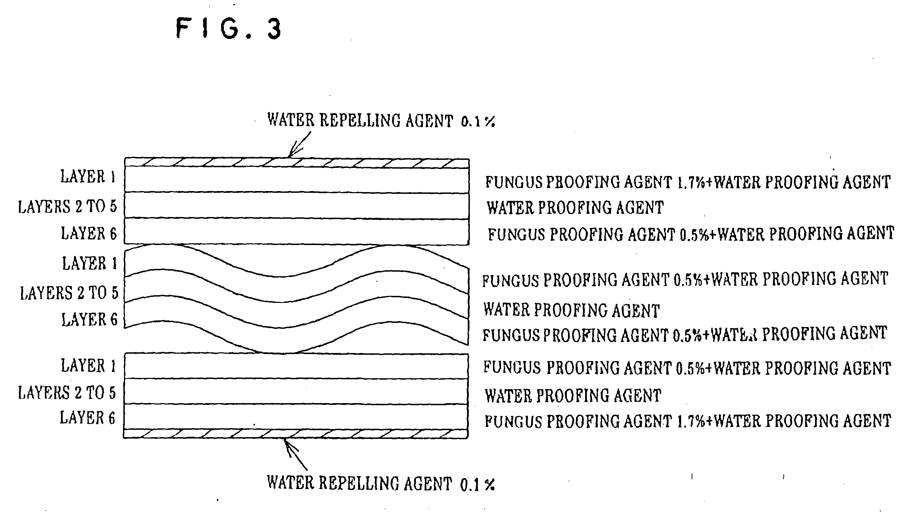

A corrugated fiberboard sheet was produced by following the procedure of Example 1 while having the first layers (the outermost layers in a corrugated fiberboard sheet) of the outer paperboard and the inner paperboard each provided with a coating layer containing a water-repelling agent in the amount of 0.1 g/m². The water-repelling agent was a paraffin product (having a solid component concentration of 30%) of Seiko Kagaku Kogyo Ltd., Japan, sold under the trademark designation of "Paratex NS-6". The construction of the corrugated fiberboard sheet mentioned above is illustrated in Fig. 3.

### Referential Comparative Example:

An outer paperboard was produced by following the procedure of Referential Example while omitting the incorporation of the waterproofing agent in the second through fifth layers. The construction of the outer paperboard mentioned above is illustrated in Fig. 1(b).

### Comparative Example 1:

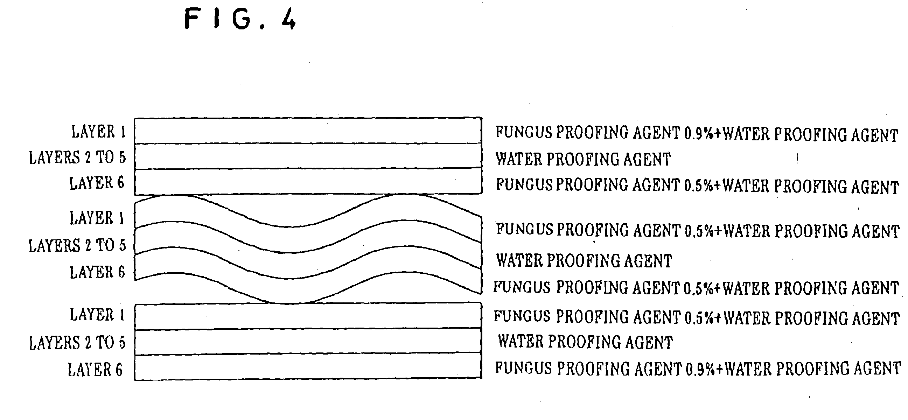

A corrugated fiberboard sheet was produced by following the procedure of Example 1 while changing the ratio of incorporation of the fungusproofing agent in the first layers of the outer paperboard and the inner paperboard to 0.9%. The construction of the corrugated fiberboard sheet mentioned above is illustrated in Fig. 4.

### Comparative Example 2:

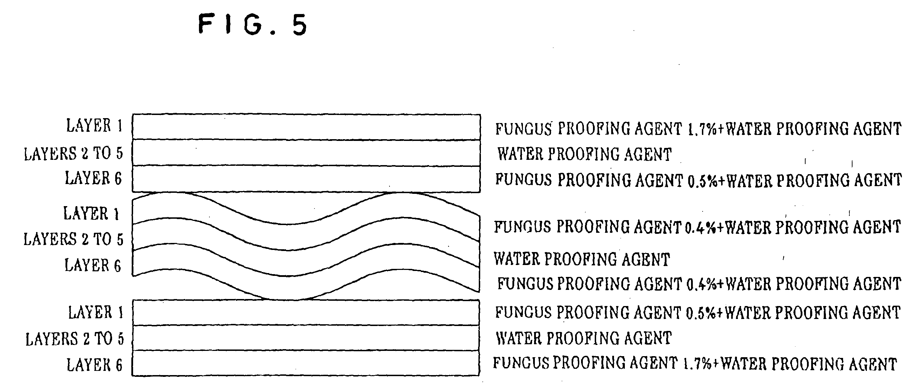

A corrugated fiberboard sheet was produced by following the procedure of Example 1 while changing the radio of incorporation of the fungusproofing agent in the first layer and the sixth layer of the corrugating medium to 0.4%. The construction of the corrugated fiberboard sheet mentioned above is illustrated in Fig. 5.

### Comparative Example 3:

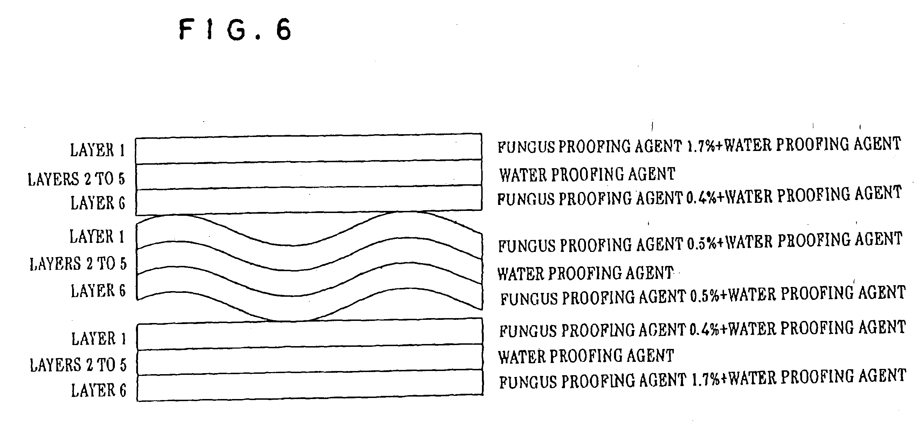

A corrugated fiberboard sheet was produced by following the procedure of Example 1 while changing the ratio of incorporation of the fungusproofing agent in the innermost layers of the outer paperboard and the inner paperboard to 0.4%. The construction of the corrugated fiberboard sheet mentioned above is illustrated in Fig. 6.

### Comparative Example 4:

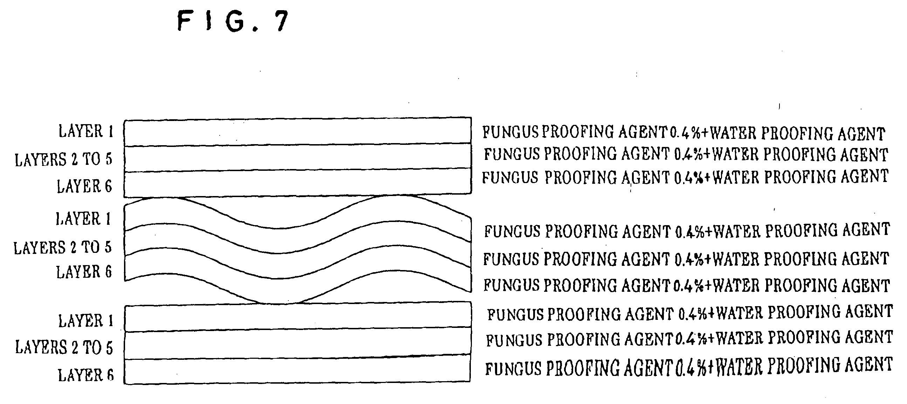

A corrugated fiberboard sheet was produced by following the procedure of Example 1 while changing the ratio of incorporation of the fungusproofing agent in all the layers (first through sixth layers) of the outer paperboard, inner paperboard and corrugating medium to 0.4%. The construction of the corrugated fiberboard sheet mentioned above is illustrated in Fig. 7.

The outer paperboards obtained in Referential Example and Referential Comparative Example, were subjected to the following characteristic test. The results of the test are shown in Table 1 below. Since the inner paperboard was produced by the same method as the outer paperboard, it was omitted from the test.

The standard atmosphere for testing the paper was in accordance with JIS P8111.

The basis weight was determined in accordance with JIS P8124.

The ratio of increase of the weight by 24 hours' immersion in water was determined in accordance with the method of the relevant manufacturer's own specification.

**Table 1**

| | | Referential Example | Referential Comparative Example |
|---|---|---|---|
| Fungusproofing agent | Ratio of incorporation of first layer (%) | 1.70 | ← |
| | Ratio of incorporation of 6^{th} layer (%) | 0.50 | ← |
| | Ratio of incorporation of 2^{nd} to 5^{th} layers (%) | No | ← |
| Waterproofing agent | Incorporation in first layer | Yes | ← |
| | Incorporation in 6^{th} layer | Yes | ← |
| | Incorporation in 2^{nd} to 5^{th} layers | Yes | No |
| Paper quality | Basis weight (g/m²) | 211 | 210 |
| | Ratio of increase of weight by 24 hours' immersion in water (%) | 48 | 120 |

It is clear from Table 1 that the sample of Referential Example which omitted incorporation of the waterproofing agent in the second through fifth layers in the outer paperboard and the inner paperboard could not be used because of high ratio of increase of weight by 24 hours' immersion in water and unduly low waterproofing property. When the paperboards were put into a corrugated fiberboard sheet by the use of a corrugating machine, the sheet could not withstand prolonged sprinkling of water and failed to retain the shape-retaining property.

Trays for seedling pots were constructed from the corrugated fiberboard sheets obtained in Examples 1 and 2 and Comparative Examples 1 to 4 and subjected to the following fungusproofing test. The results of the test are shown in Table 2 below.

The fungusproofing test was performed by placing the trays for seedling pots on the soil in a plastic film greenhouse, sprinkling water over the trays day and night over a period of seven months through ten months, and examining them as regards the condition of growth of fungus thereon and rating the conditions based on the following standard of evaluation.
- -:: Total absence of growth of fungus on the surface and the end face for ten months.
- -:: Total absence of growth of fungus on the surface and the end face for seven months.
Growth of fungus occurred on less than one third of the surface in the tenth month.
- ±:: Growth of fungus occurred only on the end face within seven months.
- +:: Growth of fungus occurred on less than one third of the surface within seven months.
- ++:: Growth of fungus occurred on less than one third of the surface within seven months.
Growth of fungus occurred on the end face within seven months.
- +++:: Growth of fungus occurred on one third to two thirds of the surface within seven months.
Growth of fungus occurred on the end face within seven months.
- ++++: Growth: of fungus occurred on not less than two thirds of the surface within seven months.
Growth of fungus occurred on the end face within seven months.

**Table 2**

| | | Ex. 1 | Ex. 2 | C.Ex. 1 | C.Ex.2 | C.Ex.3 | C.Ex.4 |
|---|---|---|---|---|---|---|---|
| Ratio of incorporation of fungus-proofing agent (%) | Outer paperboard First layer (outermost layer) | 1.70 | ← | 0.90 | 1.70 | ← | 0.40 |
| | 2^{nd} to 5^{th} layers | No | ← | ← | ← | ← | Each 0.40 |
| | 6^{th} layer (innermost layer) | 0.50 | ← | ← | ← | 0.40 | ← |
| | Corrugating medium | | | | | | |
| | First layer | 0.50 | ← | ← | 0.40 | 0.50 | 0.40 |
| | 2^{nd} to ^{th} layers | No | ← | ← | ← | ← | Each 0.40 |
| | 6^{th} layer | 0.50 | ← | ← | 0.40 | 0.50 | 0.40 |
| | Inner paperboard | | | | | | |
| | 6^{th} layer (innermost layer) | 0.50 | ← | ← | ← | 0.40 | ← |
| | 2^{nd} to 5^{th} layers | No | ← | ← | ← | ← | Each 0.40 |
| | First layer (outermost layer) | 1.70 | ← | 0.90 | 1.70 | ← | 0.40 |
| | Average ratio of Incorporation per Layer | 0.30 | ← | 0.21 | 0.29 | 0.29 | 0.40 |
| Water-replling agent | Amount of coating on outer paperboard and inner paperboard (g/m²) | No | 0.1 | No | ← | ← | ← |
| Characteristic Property | Fungusproofing test | - | -- | + | ± | ± | ++ |
| A waterproofing agent was incorporated equally in all the layers of the three kinds of paperboards. | | | | | | | |

It is clear from Table 2 that the tray for seedling pots formed with the corrugated fiberboard sheet obtained in Example 1 generated no fungus on the surface and end face thereof within seven months, however generated fungus on the surface in the ten months. The pot of the corrugated fiberboard sheet of Example 2 which was coated with the water-repelling agent generated absolutely no fungus for ten months. Since the ordinary trays for seedling pots are expected to retain fungusproofing property for seven months, the corrugated fiberboard sheet of Example I offers sufficient durability. For the sake of enabling the fungusproofing property to last for a longer period, the sheet requires to be coated with the water-repelling agent. Thus, the corrugated fiberboard sheet of Example 2 is confirmed to offer sufficient durability.

In contrast, the corrugated fiberboard sheet of Comparative Example 1 generated fungus on the surface thereof within seven months because the ratio of incorporation of the fungusproofing agent in the outermost layers fell short of 1.0%.

Then, the corrugated fiberboard sheets of Comparative Example 2 and Comparative Example 3 generated no fungus on their surfaces within seven months. They, however, generated fungus on the end face thereof because the ratio of incorporation of the fungusproofing agent in the innermost layers of the corrugating medium and the outer paperboard and the inner paperboard which were contiguous with the corrugating medium fell short of 0.5%.

The sample of Comparative Example 4 which had 0.4% fungusproofing agent incorporated in all the layers of the three kinds of paperboards generated fungus on the surface and end face thereof within seven months because the amounts of incorporation in the outer paperboard, the inner paperboard and the corrugating medium fell short of the specified lower limit.

### Industrial Applicability:

The corrugated fiberboard sheet of this invention, as described above, is a corrugated fiberboard sheet which is composed of three kinds of paperboards made mainly of wastepaper raw material and has a fungusproofing agent of a prescribed amount incorporated at a prescribed position (layer) and a waterproofing agent incorporated in all the layers of the paperboards. When this corrugated fiberboard sheet is used as a case like a tray for containing seedling pots which are used for raising seedlings of plants, such as vegetables and flowers, it exhibits a fungusproofing property and a waterproofing property enough to withstand prolonged sprinkling of water and excels in the requisites of cost performance. Further, the corrugated fiberboard sheet of this invention possesses an excellent ability to permit recycling because it uses the very wastepaper as a principal raw material.

Particularly when this corrugated fiberboard sheet is provided on the surfaces of the outermost layers of the outer paperboard and the inner paperboard each with a coating layer having the solid contents of a water-repelling agent deposited in the amount of 0.1 to 2.0 g/m², it acquires a more lasting fungusproofing property.

## Claims

1. A corrugated fiberboard sheet composed of three kinds of paperboards that are an outer paperboard, a corrugating medium and an inner paperboard, said paperboards each being comprised of not less than three layers of raw material mainly of wastepaper, all the layers of each of said paperboards being given a waterproofing treatment, and a ratio of incorporation of a fungusproofing agent and positions of incorporation satisfying (1) a ratio of incorporation of the fungusproofing agent in outermost layers of the outer paperboard and the inner paperboard being in a range of 1 to 4%, (2) a ratio of incorporation of the fungusproofing agent in innermost layers of the outer paperboard and the inner paperboard being in a range of 0.5 to 4% and (3) a ratio of incorporation of the fungusproofing agent in opposite outermost layers of the corrugating medium being in a range of 0.5 to 4%.

2. A corrugated fiberboard sheet according to claim 1, further furnished on surfaces of the outermost layers of said outer paperboard and said inner paperboard each with a coating layer having a solid component of a water-repelling agent deposited in an amount of 0.1 to 2.0 g/m².

3. A method for the production of a corrugated fiberboard sheet comprised of an outer paperboard, a corrugating medium and an inner paperboard, comprising the steps of:
causing slurry of a raw material formed mainly of wastepaper to have a waterproofing agent and a fungusproofing agent incorporated therein so as to satisfy (1) a ratio of incorporation of the fungusproofing agent in outermost layers of the outer paperboard and the inner paperboard being in a range of 1 to 4%, (2) a ratio of incorporation of the fungusproofing agent in innermost layers of the outer paperboard and the inner paperboard being in a range of 0.5 to 4% and (3) a ratio of incorporation of the fungusproofing agent in opposite outermost layers of the corrugating medium being in a range of 0.5 to 4%;
paper-making the slurry so as to form the outer paperboard, corrugating medium and inner paperboard; and
putting the three kinds of paperboards into a corrugated fiberboard sheet using a corrugating machine.

4. A method according to claim 3, wherein said outer paperboard and said inner paperboard are each furnished on surfaces of outermost layers thereof each with a coating layer having a solid content of a water-repelling agent deposited in an amount of 0.1 to 2.0 g/m².
